# EUROPEAN PATENT APPLICATION

(11) **EP 3 269 495 A1**
(43) Date of publication of application: **17.01.2018**
(21) Application number: 16761481.7
(22) Date of filing: 23.02.2016
(51) Int. Cl.: B23K 35/30, C22C 38/00, C22C 38/48

(54) **BUILD-UP WELDING METAL AND MECHANICAL STRUCTURE**

(30) Priority: 10.03.2015 JP 2015047739
(71) Applicant: Kabushiki Kaisha Kobe Seiko Sho (Kobe Steel, Ltd.), Kobe-shi, Hyogo 651-8585 (JP)
(72) Inventor: MIYAMURA Takeo, Hyogo 651-2271 (JP); NAMBA Shigenobu, Hyogo 651-2271 (JP); IKEDA Tetsunao, Kanagawa 251-8551 (JP); ISHIDA Masatoshi, Kanagawa 251-8551 (JP)
(74) Representative: Müller-Boré & Partner Patentanwälte PartG mbB
(86) International application number: PCT/JP2016/055304
(87) International publication number: WO 2016/143509

(57) **Abstract**

This overlay weld metal contains: Ni, Cr, Nb, C, Si, Mn, P, S, Cu, Mo, and Al each at a specific amount; unavoidable impurities; and an oxide inclusion by 1000-1800 pieces/mm², wherein the ratio of Si with respect to the total of Mn, Al, and Si in the oxide inclusion is not lower than 13% in mass fraction.

## Description

### Technical Field

The present invention relates to an overlay weld metal and a machine structure including the overlay weld metal. More particularly, the present invention relates to: an overlay weld metal formed by overlay welding using a welding material, such as a strip electrode; and a machine structure.

### Background Art

In the fields of petroleum refining and chemical plants, pressure vessels made of a Cr-Mo steel or a ferritic stainless steel that withstand high-temperature environments are used, and the inner surfaces thereof are generally subjected to overlay welding using austenitic stainless steels containing Cr and Ni in high concentrations and having excellent corrosion resistance for the purpose of insuring corrosion resistance.

For example, in Patent Document 1, a high-chromium-content two-phase stainless-steel welding material constituted of an austenite phase and a ferrite phase and containing no σ-phase has hitherto been proposed for the purpose of improving corrosion resistance, the welding material being a steel strip having a thickness of 1 mm or less obtained by rapidly cooling and solidifying a molten steel (see Patent Document 1).

### Prior Art Document

### Patent Document

Patent Document 1: JP-A-H03-114693

### Summary of the Invention

### Technical Problems

In recent years, there is a problem in that a brittle phase such as a σ-phase is formed in the overlay weld metal that is a stainless steel in a case where a heat treatment after welding is performed at a high temperature for a long period of time. In order to inhibit the overlay weld metal from suffering such embrittlement, it is necessary to reduce the σ-phase to be formed by a heat treatment after welding, and it is effective to lower Mn concentration. However, the technique described in Patent Document 1 is intended to inhibit welding materials from suffering σ-embrittlement due to hot working during the production, and is not a technique for inhibiting a weld metal from suffering σ-embrittlement through the welding or through the heat treatment after welding.

Moreover, convex-concave portions to be catalyst beds are present in the pressure vessels, and the portions receive the highest stress among the portions to which the overlay weld metal is applied. In order to prevent damages under such high stress, the overlay weld metal is required to have sufficient ductility such as sufficient elongation at break under tensile deformation. Furthermore, when heat stress is generated by operation and stop of the pressure vessel, there is a case where cracks are generated and developed at the overlay weld metal portion. From such a viewpoint, the overlay weld metal is also required to have satisfactory toughness.

As described above, for inhibiting the overlay weld metal from suffering embrittlement, it is necessary to reduce the σ-phase to be formed by the heat treatment after welding. Although it is effective to decrease the Mn concentration, there is a problem in that when the Mn concentration is decreased, the ductility of the overlay weld metal is not sufficiently obtained in a case where S is unexpectedly added in a high concentration, which is derived from a welding material or a flux. If satisfactory ductility is intended to be obtained even under a state of high S concentration, it is necessary to increase the Mn concentration to reduce solute S, so that the Mn concentration is not sufficiently lowered and the enbrittlement cannot be inhibited. As above, a method of decreasing the Mn concentration is present against the embrittlement but, in a case where the S concentration is high, there is a problem in that it is difficult to achieve both of ductility and toughness of the overlay weld metal.

The present invention is devised in consideration of the above circumstances, and a main object of the present invention is to provide: an overlay weld metal which is inhibited from suffering embrittlement, particularly embrittlement after a weld heat treatment without deteriorating corrosion resistance and which is further excellent in toughness and ductility; and a machine structure.

### Solution to Problems

The present invention provides an overlay weld metal comprising: Ni: 9 to 11 mass%; Cr: 18 to 21 mass%; Nb: 0.1 to 1 mass%; C: 0.08 mass% or less; Si: 0.15 to 0.75 mass%; Mn: 0.9 to 1.3 mass%; P: 0.040 mass% or less; S: 0.010 to 0.030 mass%; Cu: 0.75 mass% or less; Mo: 0.75 mass% or less; and Al: 0.004 mass% or less, with the remainder being iron and inevitable impurities, wherein the overlay weld metal contains 1,000 to 1,800 Number/mm² of an oxide inclusion and a ratio of Si to a sum of Mn, Al, and Si in the oxide inclusion is 13% or more in mass fraction.

In addition, the present invention provides a machine structure comprising the overlay weld metal according to the present invention on a surface thereof.

### Advantageous Effects of the Invention

According to the present invention, there are provided an overlay weld metal which is inhibited from suffering embrittlement, particularly embrittlement after a weld heat treatment without deteriorating corrosion resistance and which is further excellent in toughness and ductility, and a machine structure.

### Description of Embodiments

Embodiments for carrying out the present invention are explained below in detail. The present invention should not be construed as being limited to the embodiments explained below.

The overlay weld metal according to the embodiment of the present invention is an overlay weld metal formed by welding with a strip electrode constituted of a stainless steel, for the purpose of improving the corrosion resistance under high temperature environments, which includes Ni: 9 to 11 mass%; Cr: 18 to 21 mass%; Nb: 0.1 to 1 mass%; C: 0.08 mass% or less; Si: 0.15 to 0.75 mass%; Mn: 0.9 to 1.3 mass%; P: 0.040 mass% or less; S: 0.010 to 0.030 mass%; Cu: 0.75 mass% or less; Mo: 0.75 mass% or less; Al: 0.004 mass% or less; and inevitable impurities, wherein the overlay weld metal contains 1,000 to 1,800 Number/mm² of an oxide inclusion and a ratio of Si to a sum of Mn, Al, and Si in the oxide inclusion is 13% or more in mass fraction. Further, the machine structure according to the embodiment of the present invention is a machine structure including the overlay weld metal according to the embodiment of the present invention on a surface thereof. In the overlay weld metal according to the embodiment of the present invention and the machine structure including the overlay weld metal on a surface thereof, both of satisfactory toughness and sufficient ductility can be achieved even when the S concentration in the overlay weld metal is high and it becomes possible to inhibit the overlay weld metal from damaging. Moreover, since a high S concentration is allowable, restriction on components of the welding material and flux to be used is relieved and productivity during the welding can be improved.

The present inventors diligently made investigations on overlay weld metals formed by welding with strip electrodes constituted of stainless steels, for the purpose of improving the corrosion resistance under high temperature environments. As a result, the inventors confronted with a problem in that, although the formation of the σ-phase is inhibited by reducing the Mn concentration in the overlay weld metal and toughness is improved, the solute S is not completely fixed as MnS in a case of high S concentration and ductility is impaired. Accordingly, when the inventors have investigated and studied the relevance to the toughness and ductility of the overlay weld metal while focusing on inclusions, they have found that satisfactory toughness and ductility can be both achieved even at a high S concentration by controlling the average composition ratio of oxide inclusions contained in the overlay weld metal (Si/(Si+Mn+Al)) to 13% or more in mass fraction and controlling the Mn concentration to 0.9 mass% or more.

Namely, the overlay weld metal according to the embodiment of the present invention and the machine structure including the overlay weld metal on a surface thereof can have satisfactory toughness by enhancing the ratio of the Si concentration in the inclusions in the weld metal even when the Mn concentration is not lowered excessively. Furthermore, since the Mn concentration is not lowered excessively, the influence of the solute S can be reduced even at a high S concentration and satisfactory ductility can be simultaneously obtained.

Here, the composition of the oxide inclusions is not always univocally determined because it depends on the difference in the cooling rate that relates to the thickness of the overlay weld metal and the temperature of the base metal and the hygroscopic degree of the flux to be used which is dependent on storage conditions but, by lowering the Al concentration further from a usual impurity level while controlling the Si concentration and the Mn concentration to ones specified in the overlay weld metal according to the embodiment of the present invention, the average composition ratio of the oxide inclusions as shown in the above can be obtained.

Namely, the overlay weld metal according to the embodiment of the present invention includes, as the composition: Ni: 9 to 11 mass%; Cr: 18 to 21 mass%; Nb: 0.1 to 1 mass%; C: 0.08 mass% or less; Si: 0.15 to 0.75 mass%; Mn: 0.9 to 1.3 mass%; P: 0.040 mass% or less; S: 0.010 to 0.030 mass%; Cu: 0.75 mass% or less; Mo: 0.75 mass% or less; Al: 0.004 mass% or less; and inevitable impurities, and the overlay weld metal contains 1,000 to 1,800 Number/mm² of an oxide inclusion and a ratio of Si to a sum of Mn, Al, and Si in the oxide inclusion is 13% or more in mass fraction, so that excellent ductility and toughness can be obtained.

Next, reasons for the numerical ranges of the components contained in the overlay weld metal according to the embodiment of the present invention are explained.

### [C: 0.08 mass% or less (exclusive of 0 mass%)]

C fixes Cr, which has the function of improving corrosion resistance, as carbides and undesirably forms Cr-depleted layers around the carbides, the Cr-depleted layers serving as starting points of corrosion. Consequently, as the upper limit of the C content for maintaining satisfactory corrosion resistance, it is 0.08 mass% or less, preferably 0.06 mass% or less, more preferably 0.04 mass% or less.

### [Si: 0.15 to 0.75 mass%]

Si is an element which brings about the function of deoxidizing and improves the melt flowability of a weld metal but is also an element that brings about unstabilization of the austenite phase in the weld metal when contained too much. Consequently, as the upper limit of the Si content, it is 0.75 mass% or less, preferably 0.6 mass% or less, more preferably 0.5 mass% or less. Further, as the lower limit of the Si content, it is 0.15 mass% or more, preferably 0.25 mass% or more, more preferably 0.35 mass% or more.

### [Mn: 0.9 to 1.3 mass%]

Mn has the function of deoxidizing and also the function of stabilizing the austenite phase. For obtaining such functions, in general, a content of 0.2 mass% or more is necessary. However, on the presupposition for obtaining satisfactory tensile ductility in the composition of a high S concentration that is a subject of the present invention, as the lower limit of the Mn content, it is 0.9 mass% or more, preferably 0.95 mass% or more, more preferably 1.0 mass% or more. Further, the Mn concentration also influences the toughness after the weld heat treatment and, for obtaining satisfactory toughness together with the effects of the oxide inclusions contained in the overlay weld metal according to the embodiment of the present invention, as the upper limit of the Mn content, it is 1.3 mass% or less, preferably 1.2 mass% or less, more preferably 1.1 mass% or less.

### [Ni: 9 to 11.0 mass%]

Ni is an element which has the function of stabilizing the austenite phase. For maintaining the austenite phase, it is necessary to control the Ni content to 9.0 mass% or more. However, when the Ni content is too high and exceeds 11.0 mass%, this leads to an increase in cost. As the lower limit of the Ni content, it is preferably 9.5 mass% or more and more preferably 10.0 mass% or more. As the upper limit thereof, it is preferably 10.7 mass% or less and more preferably 10.5 mass% or less.

### [Cr: 18 to 21 mass%]

Cr is an essential component for enabling the overlay weld metal to show excellent corrosion resistance and is an element which is essential for imparting the basic properties required of overlay weld metals. For obtaining such suitable corrosion resistance, the Cr content must be 18 mass% or more but, in a case where the Cr content is too high and exceeds 21 mass%, this leads to embrittlement of the weld metal even though the effect of the present invention function. Consequently, as the upper limit of the Cr content, it is 21 mass%. As the lower limit of the Cr content, it is preferably 18.5 mass% or more and more preferably 19.0 mass% or more. As the upper limit thereof, it is 20.5 mass% or less and more preferably 20.0 mass% or less.

### [Nb: 0.1 to 1.0 mass%]

Nb fixes the carbon contained in the steel to inhibit the formation of Cr-depleted layers and has the function of enhancing the contribution of the Cr to corrosion resistance. For obtaining such functions, as the lower limit of the Nb content, it must be 0.1 mass% or more, preferably 0.3 mass% or more, more preferably a content that is 8 times the C concentration as a sufficient amount for fixation of C. However, for the reason of resulting in an increase in cost, as the upper limit of the Nb content, it is 1.0 mass% or less, preferably 0.8 mass% or less, and more preferably 0.7 mass% or less.

### [Mo: 0.75 mass% or less (exclusive of 0 mass%)]

Mo brings about the same function as Cr and it is also possible to contain it for the purpose of regulating the corrosion resistance. However, too high Mo contents lead to embrittlement of the weld metal to such a degree that the effects of the present invention are considerably lessened. Consequently, as the upper limit of the Mo content, it is 0.75 mass% or less, preferably 0.40 mass% or less, and more preferably 0.30 mass% or less.

### [Cu: 0.75 mass% or less (exclusive of 0 mass%)]

Although Cu is an inevitable impurity, excessively high contents thereof undesirably make the weld metal undergo precipitation strengthening and harden thereby. Consequently, the Cu content must be 0.75 mass% or less. As the upper limit thereof, it is preferably 0.06 mass% or less and more preferably 0.05 mass% or less.

### [S: 0.010 to 0.030 mass%]

S is an inevitable impurity, but an increase in the content thereof leads to considerable embrittlement. Consequently, as the upper limit of the S content, it must be 0.030 mass% or less. As the upper limit of the S content, it is preferably regulated to 0.020 mass% or less, more preferably regulated to 0.015 mass% or less. The present invention is directed to a technique that is effectively functions in a case of a high S concentration and, in the overlay weld metal according to the embodiment of the present invention, as the lower limit of the S content (concentration), it is 0.010 mass% or more and preferably 0.012 mass% or more.

### [P: 0.040 mass% or less (exclusive of 0 mass%)]

P is an inevitable impurity. In a case where the content thereof increases, welding cracks become prone to occur. Consequently, as the upper limit of the P content, it must be 0.040 mass% or less. As the upper limit of the P content, it is preferably regulated to 0.030 mass% or less, more preferably regulated to 0.020 mass% or less.

### [Inevitable Impurities]

The elements specified in the overlay weld metal according to the embodiment of the present invention are as described above and the remainder is iron and inevitable impurities, but even when Sn, Pb, Sb, As, Se, Zn, Ca, Mg, Ti, Zr, Y, Ta, Hf, Sc, Co, Ag and the like, derived from raw materials, flux, or welding atmosphere, are contained as inevitable impurities, this does not lessen the effects of the present invention. It is, however, noted that low-melting-point metals such as Sn, Pb, Sb, As, Se, and Zn induce welding cracks as the contents thereof increase, and it is hence desirable to regulate the concentration of these elements to low. Meanwhile, Ti, Zr, Y, Ca, and Mg are prone to form coarse nitride inclusions or oxide inclusions to reduce the mechanical properties, and it is hence desirable to regulate the concentration thereof to low.

The overlay weld metal according to the embodiment of the present invention has the above-described composition and also it is necessary that the oxide inclusions to be contained in the overlay weld metal should be contained in a number density of 1,000 to 1,800 Number/mm² and an average composition ratio of the oxide inclusions: Si/(Si+Mn+Al) should be 13% or more in mass fraction. By satisfying such requirements, the formation of Mn oxides is inhibited and the function of fixation of S by Mn can be ensured, so that satisfactory ductility and toughness can be obtained without increasing the amount of Mn to be added. For forming such oxide inclusions, there are factors relating to welding conditions such as the thickness and cooling rate of the overlay weld metal and the hygroscopic degree of the flux and factors relating to the composition. Regarding the composition, in addition to the above restriction on the composition, the Al concentration must be restricted to a further lower level than the usual impurity level as described below.

### [Al: 0.004 mass% or less (exclusive of 0 mass%)]

Al is an element which brings about the function of deoxidizing but is one of inevitable impurities. In the present invention, since a desired inclusion composition is easily obtained by reducing the content thereof, the content of Al is regulated to 0.004 mass% as the upper limit in the overlay weld metal according to the embodiment of the present invention. Preferably, as the upper limit of the Al content, it is regulated to 0.003 mass% or less and more preferably regulated to 0.002 mass% or less.

### [Formation Method of Overlay Weld Metal]

A method for forming the overlay weld metal according to the embodiment of the present invention is explained below in detail.

As the method for forming the overlay weld metal according to the embodiment of the present invention, for example, SAW (submerged-arc welding) or ESW (electroslag welding) using a strip-electrode overlay welding material can be used but the method is not limited to these so long as the desired overlay weld metal is obtained. It is desirable that the strip-electrode overlay welding material to be used should have a width of 15 mm or larger, from the standpoint of efficiently performing the welding over a large area. From the standpoint of smoothly feeding the continuous welding material, a welding material having a thickness of 0.8 mm or less can be used. These can be produced, for example, by subjecting a steel slab obtained through melting to rolling and bright annealing, and may be any such strip in which the surfaces have not excessively oxidized and have a metallic luster.

For obtaining the composition of the oxide inclusions specified in the overlay weld metal according to the embodiment of the present invention, the contents of individual components of the overlay weld metal must be within the above numerical ranges, and many elements can be controlled by changing the composition of the welding material. There is a case where the desired components might be easily obtained by heightening the concentrations of Cr or Nb, which is prone to be oxidized and consumed, beforehand. It is also possible to control the components of the overlay weld metal by adding raw materials to the flux to be used during the welding.

In the overlay weld metal according to the embodiment of the present invention, in addition to the main elements constituting the overlay weld metal, it is also important to regulate the Al concentration that is contained in an impurity level, and the regulation can be achieved by selecting a welding material or flux having a low Al concentration, and for example, the Al concentration of the welding material can be lowered by reducing the use of Al during a deoxidizing treatment at the melt-production stage of the welding material. The inclusions specified in the overlay weld metal according to the embodiment of the present invention are oxide inclusions, and thus, an oxygen concentration sufficient for forming the oxide inclusions is required. The oxygen concentration in the weld metal is affected by the concentration of the oxygen contained in the wire and the basicity of the flux and also the hygroscopic degree of the flux during the welding. For obtaining the oxide inclusions specified in the overlay weld metal according to the embodiment of the present invention, oxygen must be incorporated into the weld metal from any of the above supply sources, and the content can be regulated by the compositions of the wire and flux and also a heating/drying treatment of the flux before the welding.

For obtaining the composition of the oxide inclusions specified in the overlay weld metal according to the embodiment of the present invention, the contents of individual components in the overlay weld metal are controlled within the above numerical ranges, and then, it is also necessary to select welding conditions. As the welding conditions, there are current, voltage, and a welding speed. They are represented by Heat Input [J/cm] (= 60 × Current [A] × Voltage [V] / Welding Speed [cm/min]), and since a strip electrode is used, the heat input per unit width must be 12 [kJ/cm] or more. Further, a pre-heating temperature is set to 200°C or lower, and further the ratio of the thickness tw of the overlay weld metal to the thickness tm of the base metal (tm/tw) must be 10 or more.

For ascertaining the amounts of individual components contained in the overlay weld metal according to the embodiment of the present invention, the density of the oxide inclusions, and the composition ratio of the oxide inclusions, it is necessary to analyze the components of the overlay weld metal and the inclusions contained therein. The components can be analyzed by methods suitable for individual components, such as IPC analysis and X-ray fluorescence spectroscopy but, as an analytical method for the inclusions, investigation by automatic analysis on EPMA is desirable and it is necessary to analyze at least 500 Number of inclusions having a diameter of 0.5 µm or more for the concentrations of Si, Mn, and Al. Upon the analysis, since a distribution is present in a thickness direction of the overlay weld metal, i.e., a solidification direction thereof, the measurement is performed from the joining interface to the surface in the thickness direction for the purpose of averaging.

The base metal to be welded by overlay welding with the method and material described above, that is, the base metal on which the overlay weld metal of this embodiment is to be formed, is not particularly limited. However, Cr-Mo steel materials and ferritic stainless-steel materials are suitable. By forming the overlay weld metal of this embodiment on surfaces of members constituted of any of these materials, a machine structure is rendered possible in which the overlay weld metal is less apt to crack or separate even after long-term use in a high-temperature environment. As a result, not only the high-temperature appliance can be stably operated, but also a cost reduction due to omissions of repair and maintenance is possible. Examples of the machine structure in which the overlay weld metal of this embodiment has been formed include pressure vessels for petroleum refining in which high-temperature corrosion is problematic.

The embodiment of the present invention may be configured as follows.
[1] An overlay weld metal comprising:
   Ni: 9 to 11 mass%;
   Cr: 18 to 21 mass%;
   Nb: 0.1 to 1 mass%;
   C: 0.08 mass% or less;
   Si: 0.15 to 0.75 mass%;
   Mn: 0.9 to 1.3 mass%;
   P: 0.040 mass% or less;
   S: 0.010 to 0.030 mass%;
   Cu: 0.75 mass% or less;
   Mo: 0.75 mass% or less;
   Al: 0.004 mass% or less;
   and inevitable impurities,
   wherein the overlay weld metal contains 1,000 to 1,800 Number/mm² of an oxide inclusion and a ratio of Si to a sum of Mn, Al, and Si in the oxide inclusion is 13% or more in mass fraction.
[2] A machine structure comprising the overlay weld metal according to [1] on a surface thereof.

### Examples

The present invention is specifically explained below by reference to Examples that serve the desired effects of the present invention and Comparative Examples. The scope of the present invention should not be construed as being limited to Examples.

### <Production of Overlay Weld Metals>

In order to produce overlay weld metals constituted of various components necessary for ascertaining the effects of the present invention, 30-kg ingots including each of the chemical components were subjected to melting and casting, followed by hot forging, hot rolling, cold rolling, and bright annealing and slitting, thereby forming strip-electrode overlay welding materials, the materials each having a size of 75 mm (width) × 0.4 mm (thickness). These materials were each deposited one layer on a base metal constituted of 9Cr-1Mo-V steel, by ESW (electroslag welding) under the condition of a heat input of 16 J/cm. The width of the weld metal portion after welding was about 75 mm and the thickness thereof was about 5 mm.

The components (mass%) of the resultant overlay weld metals, the number density (Number/mm²) of oxide inclusions, and the composition ratio of oxide inclusions (Si/(Si+Mn+Al)) (mass% ratio) are shown in the following Table 1. Of the components shown in Test Nos. 1 to 10, Test Nos. 1 to 4 are overlay weld metals (Examples 1 to 4) which satisfy the chemical component composition and the number density/composition ratio of the oxide inclusions specified in the present invention. Moreover, Test Nos. 5 and 6 are overlay weld metals (Comparative Examples 1 and 2) which do not satisfy the chemical component composition and the composition ratio of the oxide inclusions specified in the present invention and Test No. 7 is an overlay weld metal (Comparative Example 3) of an existing conventional example. Furthermore, Test Nos. 8 to 10 are those in which the welding condition was changed, and Test No. 8 is an overlay weld metal (Example 5) which satisfy the chemical component composition and the number density/composition ratio of the oxide inclusions specified in the present invention, Test No. 9 is an overlay weld metal (Comparative Example 4) which does not satisfy the composition ratio of the oxide inclusions specified in the present invention, and Test No. 10 is an overlay weld metal (Comparative Example 5) in which the number density of the oxide inclusions is outside the numerical ranges thereof specified in the present invention. Test Nos. 8 (Example 5) and 9 (Comparative Example 4) show the results obtained by performing test production and evaluation while using the same welding material and changing the welding condition, in which the heat input was 16 J/cm in Test No. 8 (Example 5) and the heat input was 10 J/cm in Test No. 9 (Comparative Example 4). Further, in Test No. 10 (Comparative Example 5), an overlay welding material having a low oxygen concentration of 10 ppm or less was used. Welding condition A means a heat input of 16 J/cm, Welding condition B means a heat input of 10 J/cm, and Welding condition C is an example in which the heat input is 16 J/cm and the low oxygen material is used as a welding material.

### <Evaluation Method>

Plates each having a length of 55 mm, a width of 10 mm, and a thickness of 2.5 mm were produced by machining from each of the overlay weld metals of Examples 1 to 5 and Comparative Examples 1 to 5 which had been produced as above. A U-shaped notch having a depth of 2 mm and a notch bottom radius of 1 mm was formed at the position corresponding to a length of 22.5 mm to obtain a Charpy impact test specimen of each overlay weld metal at a test temperature of 0°C. The Charpy impact test specimen has a shape in accordance with JIS Z 2242. The test specimens were subjected to a Charpy impact test under the temperature conditions of 0°C. The test specimens which, as a result, had a Charpy impact value of 10 J or more were regarded as acceptable. Moreover, a tensile test specimen having a thickness of 3 mm, a width at parallel part of 12.5 mm, and a gauge length of 50 mm in accordance with JIS Z 2242 was collected from each of the weld metal portions and was subjected to a tensile test to measure tensile elongation at break. The test specimens which, as a result, had a tensile elongation at break of 25% or more were regarded as acceptable. Furthermore, a sample was collected from a central part in a width direction of each of the overlay weld metals and the composition of oxide inclusions from joining interface to surface at a cross-section of the overlay weld metal was analyzed by EPMA. The scanning area at this time was 0.8 mm².

### <Evaluation Results and Considerations>

The following Table 1 shows the results of the Charpy impact value (J) and the tensile elongation at break (%). As is apparent from Table 1, the overlay weld metals that satisfy the component amounts of the overlay weld metal (composition), the number density of the oxide inclusions, and the composition ratio of the oxide inclusions specified in the present invention (Examples 1 to 5) were satisfactory in both of the Charpy impact value and the tensile elongation at break. On the other hand, in the conventional overlay weld metal of Test No. 7 (Comparative Example 3) which does not satisfy the ranges of the S content and the Mn content and the composition ratio of the oxide inclusions specified in the present invention, the weld metal was embrittled due to the high Mn concentration and thus the Charpy impact value was lowered. In contrast, the case where the Mn content (concentration) was lowered to such a degree that the content was outside the numerical range of the Mn content specified in the present invention is Comparative Example 1 of Test No. 5., where the impact value is improved due to the low Mn content (concentration) but the tensile elongation at break has been lowered under the conditions of high S content (concentration) (0.017 mass%). Examples in which the Mn content (concentration) is increased to 0.9 mass% or more for improving the tensile elongation at break and further the Al content (concentration) is lowered to thereby improve toughness are Examples 1 to 4 of Test Nos. 1 to 4. An example in which a satisfactory impact value is not obtained since the Al content (concentration) is such high that the content is outside the range of the Al content specified in the present invention and the value of the composition ratio of the oxide inclusions is outside the value specified in the present invention is Comparative Example 2 of Test No. 6. In Test No. 9 (Comparative Example 4) in which the heat input is lowered as compared to Test No. 8 (Example 5), the component amounts (mass%) fall within the numerical ranges specified in the present invention but the composition ratio of the oxide inclusions is outside the numerical range specified in the present invention, so that a sufficient impact value is not obtained. That is, it is difficult to regulate the composition ratio of the oxide inclusions by the components alone and the welding must be performed within the range of the conditions specified in the present invention. Moreover, in Test No. 10 (Comparative Example 5), the number density of the oxide inclusions was outside the numerical range specified in the present invention and only a low Charpy impact value was obtained. This means that the effects of the present invention are obtained by not only the components but also the use of the functions of the composition of the oxide inclusions. Thus, it was ascertained that a satisfactory Charpy impact value is obtained by making the composition ratio and number density of the oxide inclusions satisfy the numerical ranges of the present invention.

**[Table 1]**

| Test No. | Welding condition | Components of overlay weld metal (mass%) | | | | | | | | | | | Number of oxide inclusions Number density (Number/mm²) | Composition of oxide inclusions (Si/(Si+Mn+ Al)) (mass%) | Tensile elongation at break (%) | Charpy impact value (J) | Remarks |
|---|---|---|---|---|---|---|---|---|---|---|---|---|---|---|---|---|---|
| | | C | Si | Mn | P | S | Ni | Cr | Mo | Nb | Al | N | | | | | |
| 1 | A | 0.019 | 0.41 | 0.96 | 0.11 | 0.017 | 10.9 | 20.5 | 0.11 | 0.23 | 0.003 | 0.033 | 1269 | 17.9 | 25.5 | 14.5 | Ex. 1 |
| 2 | A | 0.029 | 0.38 | 1.11 | 0.008 | 0.013 | 10.5 | 19.3 | 0.09 | 0.43 | 0.001 | 0.037 | 1214 | 16.8 | 27.1 | 18.3 | Ex. 2 |
| 3 | A | 0.041 | 0.58 | 1.07 | 0.009 | 0.011 | 9.1 | 18.6 | 0.13 | 0.58 | 0.002 | 0.041 | 1131 | 14.3 | 26.6 | 17.2 | Ex. 3 |
| 4 | A | 0.027 | 0.44 | 1.19 | 0.012 | 0.014 | 9.5 | 19.9 | 0.12 | 0.49 | 0.001 | 0.037 | 1198 | 15 | 29.5 | 10.3 | Ex. 4 |
| 5 | A | 0.033 | 0.49 | 0.66 | 0.013 | 0.017 | 10.3 | 19.0 | 0.11 | 0.48 | 0.003 | 0.038 | 1112 | 17.8 | 20.2 | 17 | Comp. Ex. 1 |
| 6 | A | 0.028 | 0.51 | 1.07 | 0.011 | 0.015 | 10.1 | 19.3 | 0.12 | 0.44 | 0.005 | 0.032 | 1156 | 12.2 | 25.8 | 9.8 | Comp. Ex. 2 |
| 7 | A | 0.032 | 0.48 | 1.57 | 0.019 | 0.009 | 10.4 | 19.6 | 0.12 | 0.46 | 0.004 | 0.035 | 1310 | 6.9 | 31 | 7.7 | Comp. Ex. 3 |
| 8 | A | 0.033 | 0.51 | 1.02 | 0.011 | 0.015 | 9.8 | 19 | 0.14 | 0.43 | 0.002 | 0.043 | 1120 | 17.3 | 26.6 | 17.6 | Ex. 5 |
| 9 | B | 0.03 | 0.47 | 0.97 | 0.01 | 0.015 | 9.6 | 19.4 | 0.17 | 0.45 | 0.002 | 0.04 | 1289 | 12.4 | 25.4 | 9.5 | Comp. Ex. 4 |
| 10 | c | 0.031 | 0.49 | 0.99 | 0.012 | 0.014 | 9.9 | 19.3 | 0.16 | 0.42 | 0.002 | 0.042 | 892 | 18.1 | 26.3 | 8.8 | Comp. Ex. 5 |

While the invention has been described in detail and with reference to specific embodiments thereof, it will be apparent to one skilled in the art that various changes and modifications can be made therein without departing from the spirit and scope thereof.

The present application is based on Japanese Patent Application No. 2015-047739 filed on March 10, 2015, the contents of which are incorporated herein by reference.

### Industrial Applicability

The overlay weld metal which is inhibited from suffering embrittlement, particularly embrittlement after weld heat treatment without deteriorating corrosion resistance and which is further excellent in toughness and ductility is obtained. The overlay weld metal is especially useful in machine structures for petroleum refining, chemical plants, and the like.

## Claims

1. An overlay weld metal comprising:
Ni: 9 to 11 mass%;
Cr: 18 to 21 mass%;
Nb: 0.1 to 1 mass%;
C: 0.08 mass% or less;
Si: 0.15 to 0.75 mass%;
Mn: 0.9 to 1.3 mass%;
P: 0.040 mass% or less;
S: 0.010 to 0.030 mass%;
Cu: 0.75 mass% or less;
Mo: 0.75 mass% or less; and
Al: 0.004 mass% or less,
with the remainder being iron and inevitable impurities,
wherein the overlay weld metal contains 1,000 to 1,800 Number/mm² of an oxide inclusion and a ratio of Si to a sum of Mn, Al, and Si in the oxide inclusion is 13% or more in mass fraction.

2. A machine structure comprising the overlay weld metal according to claim 1 on a surface thereof.
